# EUROPEAN PATENT APPLICATION

(11) **EP 2 806 365 A1**
(43) Date of publication of application: **26.11.2014**
(21) Application number: 13738807.0
(22) Date of filing: 17.01.2013
(51) Int. Cl.: G06F 17/50

(54) **WIRE HARNESS ANALYSIS DEVICE, WIRE HARNESS ANALYSIS METHOD, AND WIRE HARNESS ANALYSIS PROGRAM**

(30) Priority: 19.01.2012 JP 2012009359
(71) Applicant: Yazaki Corporation, Minto-ku Tokyo 108-8333 (JP)
(72) Inventor: IIMORI Yasuo, Kosai-shi Shizuoka 431-0431 (JP); MOCHIZUKI Yasuhiro, Kosai-shi Shizuoka 431-0431 (JP); KANAI Takao, Kosai-shi Shizuoka 431-0431 (JP)
(74) Representative: Grünecker, Kinkeldey, Stockmair & Schwanhäusser
(86) International application number: PCT/JP2013/050848
(87) International publication number: WO 2013/108855

(57) **Abstract**

A wire harness analyzing device of this invention includes an input means (411) that receives the input of numerical values to model electric wires of the wire harness and a fixture which is arranged on the jig board and which makes it possible to wire the wire harness on the jig board, and an output means (415) that displays the electric wire which is wired on the fixture based on information related to the electric wire which is obtained as the result of an operation based on an algorithm using values including the numerical values input into the input means (411) as initial values to prevent penetration between electric wires and penetration between an electric wire and the fixture.

## Description

### Technical field

The present invention relates to a wire harness analyzing device, a wire harness analyzing method and a wire harness analyzing program for analyzing a wire harness.

### Background art

Before an actual wire harness is manufactured, an imaginary wire harness is modelled in a computer, and examination is made on the imaginary wire harness in a design stage. Examples of this kind of simulation are disclosed in patent documents 1 to 4.

### Citation List

### Patent Literature

Patent document 1: Japan Patent Publication No. 8-180747
Patent document 2: Japan Patent Publication No. 2003-132102
Patent document 3: Japan Patent Publication No. 2009-181746
Patent document 4: Japan Patent Publication No. 2010-49591

### Summary of the invention

### Technical Problem

If the examination is made with the above simulation in the design stage, it is required that the difference in shape or property between the actual wire harness and the imaginary wire harness is minimized. Particularly, to lower an error caused in the length of an electric wire of the wire harness, it is necessary to model the imaginary wire harness so that an electric wire in a bunch of electric wires will not penetrate other electric wires. In the present specification, "penetration" means that when the imaginary wire harness is modelled, the contact of an electric wire and an object except the electric wire is not considered, and the electric wire is placed as if the electric wire is buried in the object. An error in length may occurs since the electric wire that penetrates or is penetrated when the imaginary wire harness is modelled, may pass a course which an electric wire of the actual wire harness cannot pass.

Furthermore, in recent years, in the process of manufacturing a wire harness, to improve the operation efficiency of wiring electric wires on a jig board, in the design stage of the wire harness, the wire harness for which electric wires are wired on the jig board is modelled (refer to a patent document 2.). Even when the wire harness for which electric wires are wired on a jig board is modelled, to reduce an error that occurs in the length of an electric wire of the wire harness, it is necessary to model the imaginary wire harness so that an electric wire would not penetrate a fixture, such as a U fork, which prescribes a course along which the electric wire is wired.

The present invention is made in view of the above circumstances, and the object of the present invention is to provide a wire harness analyzing device, a wire harness analyzing method and a wire harness analyzing program so that in the design stage of a wire harness, the length and shape of each of the electric wires in the wire harness, for which the electric wires are wired on a jig board, can be more accurately modelled.

### Solution to Problem

In order to attain the above aim, the wire harness analyzing device of the present invention is characterized by the following configurations (1) to (4).
(1) A wire harness analyzing device which analyzes a wire harness wired on a jig board includes an input means that receives the input of numerical values to model electric wires of the wire harness and a fixture which is arranged on the jig board and which makes it possible to wire the wire harness on the jig board, and an output means that displays the electric wire which is wired on the fixture based on information related to the electric wire which is obtained as the result of an operation based on an algorithm using values including the numerical values input into the input means as initial values to prevent penetration between electric wires and penetration between an electric wire and the fixture.
(2) In the wire harness analyzing device according to the configuration (1), wherein the output means displays the electric wire which is wired on the fixture based on information related to the electric wire which is obtained as the result of an operation based on an algorithm using the values including the numerical values input into the input means as the initial values and considering stress that acts between electric wires and stress that acts between an electric wire and the fixture.
(3) The wire harness analyzing device according to the configuration (1) further includes an exterior component, wherein the input means receives the input of numerical values to model the electric wires and the exterior component of the wire harness, and the output means displays the electric wire which is wired on the fixture based on information related to the electric wire which is obtained as the result of an operation based on an algorithm using the values including the numerical values input into the input means as the initial values to prevent penetration between electric wires, penetration between an electric wire and the fixture, and penetration between an electric wire and the exterior component.
(4) In the wire harness analyzing device according to the configuration (3), the output means displays the electric wire which is wired on the fixture based on information related to the electric wire which is obtained as the result of an operation based on an algorithm using the values including the numerical values input into the input means as the initial values and considering stress that acts between electric wires, stress that acts between an electric wire and the fixture and stress that acts between an electric wire and the exterior component.
   In order to attain the above aim, the wire harness analyzing method of the present invention is characterized by the following configuration (5).
(5) A wire harness analyzing method which analyzes a wire harness wired on a jig board includes an input step to input numerical values to model electric wires of the wire harness and a fixture which is arranged on the jig board and which makes it possible to wire the wire harness on the jig board, an operation step to perform an operation based on an algorithm using values including the numerical values input in the input step as initial values and considering stress that acts between electric wires and stress that acts between an electric wire and the fixture, and an output step to display the electric wire which is wired on the fixture based on information related to the electric wire which is obtained as the result of the operation in the operation step.
   In order to attain the above aim, the wire harness analyzing program of the present invention is characterized by the following configuration (6).
(6) A wire harness analyzing program causing a computer to execute the steps of the wire harness analyzing method according to the configuration (5).

According to the wire harness analyzing device of the above (1) to (4), the wire harness analyzing method of the above (5) and the wire harness analyzing program of the above (6), in the design stage of a wire harness, the length and shape of each of the electric wires in the wire harness, for which the electric wires are wired on a jig board, can be more accurately modelled.

According to the wire harness analyzing device, the wire harness analyzing method and the wire harness analyzing program of the present invention, in the design stage of a wire harness, the length and shape of each of the electric wires in the wire harness, for which the electric wires are wired on a jig board, can be more accurately modelled. As a result, because the course along which an electric wire is wired on the jig board becomes nearer to the course that the electric wire of the actual wire harness follows, the design of the whole jig board such as the position where a fixture is arranged on the jig board or the shape of a fixture can be examined beforehand.

The present invention has been briefly described above. Further, details of the invention will become more apparent after embodiments of the invention described below (hereinafter referred to as "embodiments") are read with reference to the accompanying figures.

### Brief Description of Drawings

Figs. 1 (a) and 1 (b) are image figures of a wire harness which is modelled by using interatomic force potential, in which Fig. 1 (a) is a figure which indicates that the interatomic force potential does not act, and Fig. 1 (b) is a figure which indicates that the interatomic force potential acts.
Fig. 2 (a) and Fig. 2 (b) are figures which indicate interaction that acts between atoms, in which Fig. 2 (a) is a figure which indicates that an attractive force acts between atoms, and Fig. 2 (b) is a figure which indicates that a repulsive force acts between atoms.
Fig. 3 is a figure which indicates a U fork which is modelled with spherical potential evaluation atoms.
Fig. 4 is a block diagram which indicates the hardware of a wire harness analyzing device of an embodiment of the present invention.
Fig. 5 is a flowchart which indicates the steps of an analyzing method that is performed with the wire harness analyzing device of the embodiment of the present invention.
Fig. 6 is a figure which indicates a display example of electric wires and a U fork which are displayed and output by the wire harness analyzing device of the embodiment of the present invention.
Fig. 7 is a figure which indicates a U fork which is modelled into a cylindrical shape.
Fig. 8 is a figure which indicates electric wires and a corrugated tube which are modelled with spherical potential evaluation atoms.
Fig. 9 is a figure which indicates a corrugated tube which is modelled into a cylindrical shape.

### Description of Embodiments

Next, the wire harness analyzing device of an embodiment of the present invention and the analyzing method performed with the wire harness analyzing device are described in detail.

### [Wire harness simulation technique in which stress between electric wires is considered]

While the embodiment of the present invention is described, first, a wire harness simulation technique to prevent penetration between electric wires is described.

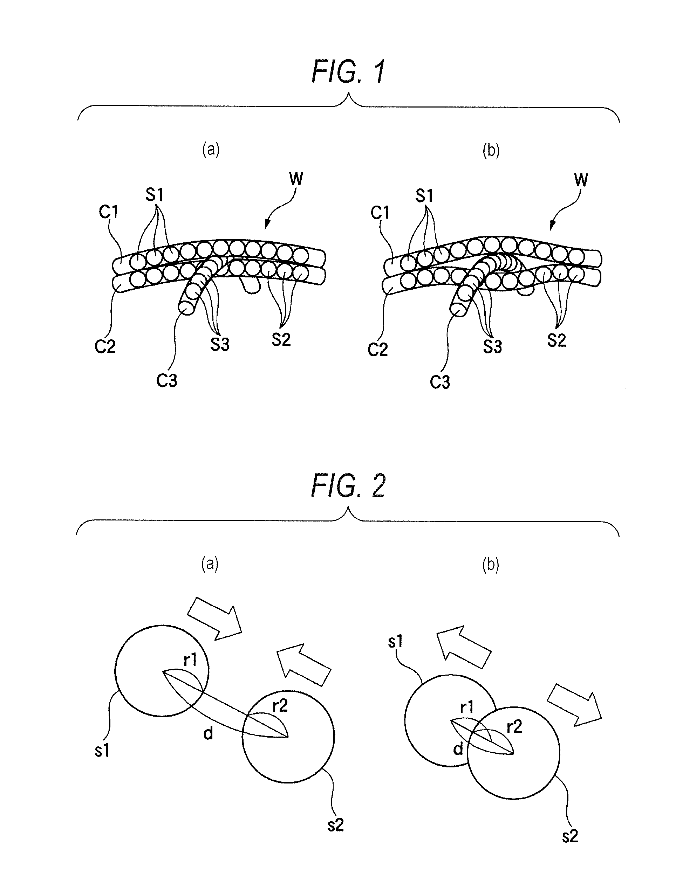

An algorithm to prevent penetration between electric wires of a wire harness is fundamentally studied in "a fundamental study on wire harness simulation technique using interatomic force potential by Takei Amane, Matsushima Motoi, Komiya Shigeru and Yamamoto Ichiro, Japan Society of Mechanical Engineers Computational Mechanics Conference Proceedings". In this non-patent document, when a wire harness is designed with CAD, as a technique to consider the stiffness of the wire and to prevent penetration between wires, by considering interatomic force potential, a mathematics model to prevent penetration between wires and a calculation algorithm of the mathematics model are proposed, which is new to dynamics models suggested so far. The abstract of the calculation algorithm is described as follows. Figs. 1 (a) and 1(b) are image figures of a wire harness which is modelled by using interatomic force potential, in which Fig. 1 (a) is a figure which indicates that the interatomic force potential does not act, and Fig. 1 (b) is a figure which indicates that the interatomic force potential acts. Fig. 2 (a) and Fig. 2 (b) are figures which indicate interaction that acts between atoms, in which Fig. 2 (a) is a figure which indicates that an attractive force acts between atoms, and Fig. 2 (b) is a figure which indicates that a repulsive force acts between atoms. For more information about the calculation algorithm, see the above non-patent document.

As shown in Figs. 1 (a) and 1 (b), a plurality of electric wires C1, C2 and C3 of a wire harness W/H are respectively modelled as spherical potential evaluation atoms S1, S2 and S3, which are arranged to be next to each other. To model the electric wires C1, C2 and C3 so that the wire diameter is longitudinally constant, radiuses R1, R2 and R3 of the potential evaluation atoms S1, S2 and S3 of the electric wires C1, C2 and C3 are all constant numerical values.

As shown in Fig. 2 (a), for the two potential evaluation atoms s1 and s2, if a distance d between the centers of the potential evaluation atoms s1 and s2 is bigger than the sum of the radius r1 of the potential evaluation atom s1 and the radius r2 of the potential evaluation atom s2, an attractive force acts on the two potential evaluation atoms s1 and s2. On the other hand, as shown in Fig. 2 (b), for the two potential evaluation atoms s1 and s2, if the distance d between the centers of the potential evaluation atoms s1 and s2 is smaller than the sum of the radius r1 of the potential evaluation atom s1 and the radius r2 of the potential evaluation atom s2, a repulsive force acts on the two potential evaluation atoms s1 and s2. In Figs. 2 (a) and 2 (b), the interatomic force potential which acts on the two potential evaluation atoms s1, s2 was described, but for each of the potential evaluation atoms S1, S2 and S3 of the above electric wires C1, C2 and C3, interatomic force potentials act between the potential evaluation atom S1, S2 or S3 and all other potential evaluation atoms S1, S2 and S3.

Thus, for each of the potential evaluation atoms S1, S2 and S3 of the above electric wires C1, C2 and C3, a total u of the interatomic force potentials act between the potential evaluation atom S1, S2 or S3 and all other potential evaluation atoms S1, S2 and S3 is calculated. Furthermore, for each of the electric wires C1, C2 and C3, sums U1, U2 or U3 of totals u of the interatomic force potentials of the potential evaluation atoms S1, S2 and S3 of the electric wires C1, C2 or C3 are calculated. The U as calculated in this way represents the potential energy that one electric wire has.

When the wire harness to be modelled is constructed by N electric wires C1, C2, ..., CN, potential energy U1, U2, ..., UN are calculated for each of the electric wire C1, C2, ..., CN. The coordinates (x, y, z) of the potential evaluation atoms S1, S2, ..., SN are provided as design variables to repeatedly calculate the potential energys U1, U2, ..., UN calculated as above, and the design variables which make the potential energys U1, U2, ..., UN to be minimized are obtained. The design variables obtained in this way of the electric wires C1, C2, ..., CN, that is, the coordinates (x, y, z) of the potential evaluation atoms S1, S2, ... SN represent the coordinates where the electric wires are in the most stable state energetically. The wire harness for which stress between electric wires is considered can be obtained in this way.

However, in the calculation algorithm suggested in this non-patent document, only penetration between electric wires, that is, only stress between electric wires is considered. To reduce an error that occurs in the length of an electric wire of a wire harness for which electric wires are wired on a jig board when the wire harness is modelled, the inventor of this application came up with an idea of preventing an electric wire from penetrating a fixture which prescribes a course along which the electric wire is wired.

### [Wire harness simulation technique in which stress between an electric wire and a fixture is considered]

An algorithm which the wire harness analyzing device of the embodiment of the present invention performs to prevent penetration between electric wires of the wire harness and penetration between an electric wire and a fixture is described as follows.

The calculation algorithm that the wire harness analyzing device of the embodiment of the present invention performs uses the algorithm described in the above item [wire harness simulation technique in which stress between electric wires is considered]. Schematically, in the calculation algorithm of the embodiment of the present invention, besides a plurality of electric wires of the wire harness W, a fixture which prescribes a course along which the electric wires are wired is also modelled as a lot of spherical potential evaluation atoms which are arranged to be next to each other. In this way, an imaginary wire harness can be so modelled that the electric wires would not penetrate the fixture.

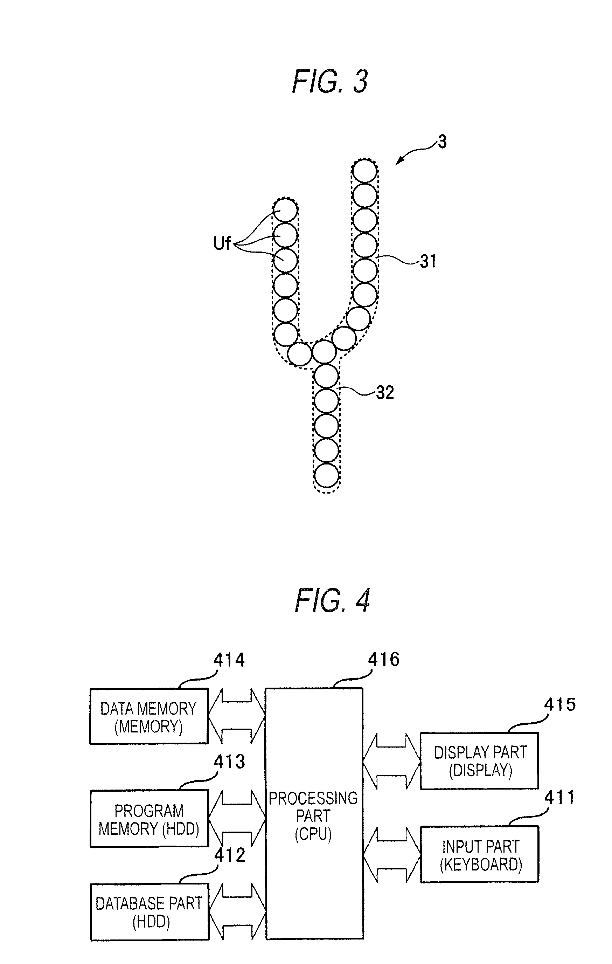

An example to model the fixture with spherical potential evaluation atoms is described. Fig. 3 is a figure which indicates a U fork which is modelled with spherical potential evaluation atoms. As shown in Fig. 3, a U fork 3 is so arranged that spherical potential evaluation atoms Uf are continuous in a U character portion 31 of a U character form. Further, a supporting portion 32 of the U fork 3 which supports the U character portion 31 is arranged at a potential evaluation atom that is positioned at the bottom of the U character portion 31 so that the spherical potential evaluation atoms Uf are continuous.

For the potential evaluation atoms Uf of the U fork 3, in consideration of the stiffness of the U fork, numerical values that provide an attractive force and a repulsive forces between potential evaluation atoms Uf are set so that the attractive force and repulsive force between potential evaluation atoms Uf are sufficiently larger than the attractive force and repulsive force between electric wires.

The calculation algorithm that the wire harness analyzing device of the embodiment of the present invention performs is performed as described in the above item [wire harness simulation technique in which stress between electric wires is considered] by using the potential evaluation atoms with which the electric wires are modelled and the potential evaluation atoms with which the fixture is modelled.

### [Hardware of the wire harness analyzing device of the embodiment of the present invention]

Fig. 4 is a block diagram which indicates the hardware of the wire harness analyzing device of the embodiment of the present invention. The wire harness analyzing device of the embodiment of the present invention includes an input part 411, a database part 412, a program memory 413, a data memory 414, a display part 415, and a processing part 416. When the wire harness analyzing device of the present invention is constructed, for example, of a general-purpose PC, the input part 411 is implemented with various input interfaces such as a keyboard, a mouse, and a numeric keypad, the database part 412 and the program memory 413 are implemented with hard disk drives (HDD), the data memory 414 is implemented with a RAM (Random Access Memory), the display part 415 is implemented with various output devices such as a CRT display or a liquid crystal display, and the processing part 416 is implemented with a CPU (Central Processing Unit). In the database part 412, information about the electric wires of the wire harness and information to model the electric wires, information about connectors of the wire harness, information about the fixture which is arranged on the jig board and information to model the fixture are stored. In the program memory 413, a program to make the processing part 416 perform the calculation algorithm described in the above-mentioned [wire harness simulation technique in which stress between an electric wire and the fixture is considered] is recorded. In the data memory 414, data which are input into and output from the processing part 416 that performs the calculation algorithm described in the [wire harness simulation technique in which stress between an electric wire and the fixture is considered] are recorded.

### [The analyzing method performed with the wire harness analyzing device of the embodiment of the present invention]

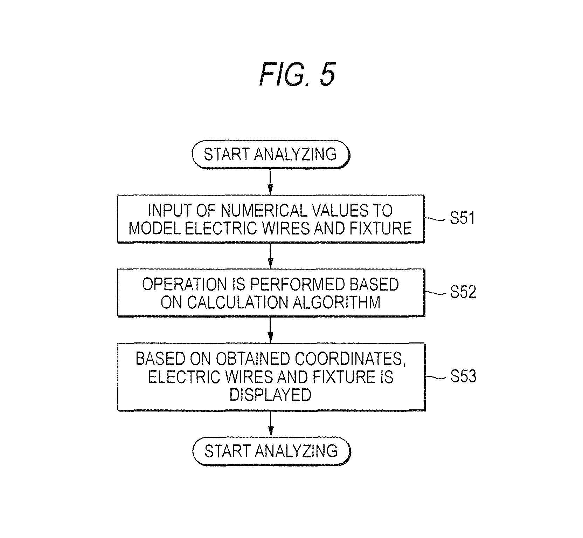

Next, the analyzing method performed with the wire harness analyzing device of the embodiment of the present invention is described with reference to Fig. 5. Fig. 5 is a flowchart which indicates the steps of the analyzing method performed with the wire harness analyzing device of the embodiments of the present invention.

First, in Step S51, the input of numerical values to model the electric wires of a wire harness and a fixture that is arranged on a jig board is received. In the Step S51, numerical values related to the electric wires such as the radius of the spherical potential evaluation atoms to model the electric wires, coordinates that provide the initial values of the potential evaluation atoms to represent the initial shapes of the electric wires, and numerical values that provide the attractive forces and repulsive forces between the potential evaluation atoms to determine the stiffness of the electric wires are input. Further, in the Step S51, numerical values related to the fixture such as the radius of the spherical potential evaluation atoms to model the fixture, coordinates that provide the initial values of the potential evaluation atoms to represent the initial shape of the fixture, and numerical values that provide the attractive forces and repulsive forces between the potential evaluation atoms to determine the stiffness of the fixture are input.

Then, in Step S52, numerical values including the numerical values input in the Step S51 are assumed as initial values, and an operation is performed based on the calculation algorithm in which stresses that act between electric wires and between an electric wire and the fixture are considered. The calculation algorithm is similar to the calculation algorithm described in the above [wire harness simulation technique in which stress between electric wires is considered].

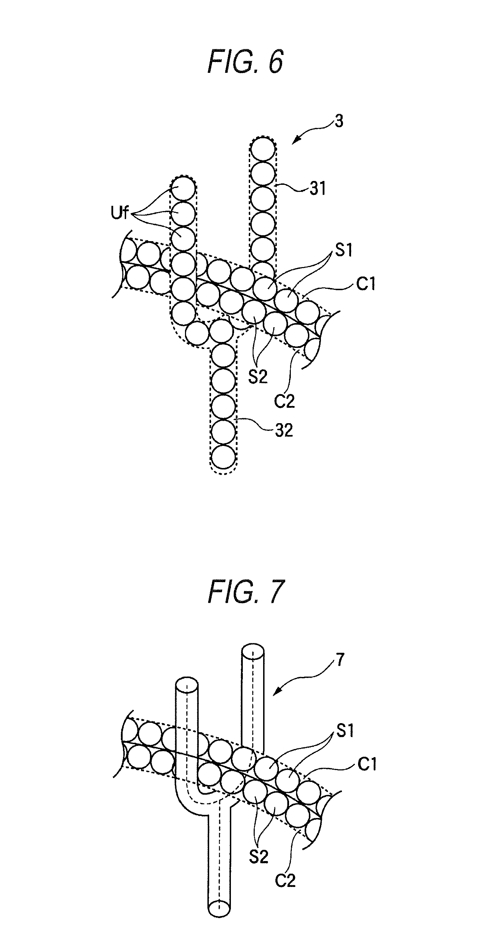

In Step S53, based on the coordinates of the potential evaluation atoms for the electric wires and the coordinates of the potential evaluation atoms for the fixture which are obtained as the result of the operation by Step S52, the electric wires which are wired on the fixture is displayed and output. Fig. 6 is a figure which indicates an display example of the electric wires and the U fork which are displayed and output by the wire harness analyzing device of the embodiment of the present invention. Specifically, at the coordinates of the potential evaluation atoms S1 and S2 of the electric wires C1 and C2 and the potential evaluation atoms Uf of the U fork 3, spheres having the same shape as that of the potential evaluation atoms S1, S2 and Uf are drawn. When the drawing is performed for all the potential evaluation atoms, as shown in Fig. 6, the plurality of electric wires C1 and C2 and the U fork 3 are drawn. Since the stress between electric wires and the stress between an electric wire and the fixture are considered for the plurality of electric wires C1 and C2 that are drawn in this way, it is prevented that one electric wire penetrates another electric wire and that an electric wire penetrates the fixture. Thereby, in the design stage of the wire harness, the length and shape of each of the electric wires in the wire harness, for which electric wires are wired on a jig board, can be more accurately modelled.

Only by drawing spheres at the coordinates of the potential evaluation atoms, the electric wires are viewed as a plurality of spheres which are coupled, and are not viewed as actual electric wires whose wire diameter is longitudinally constant. Likewise, the U fork is also viewed as a plurality of spheres which are coupled, and is not viewed as an actual U fork. Therefore, for adjacent spheres in one electric wire, the gap between the adjacent spheres is supplemented by drawing a cylindrical body so that one sphere of the two spheres is located at the end surface at one side, and the other sphere is located at the end surface at the other side. If this supplementing is performed on the gaps among all the adjacent spheres in the electric wire or the U fork, as shown in dotted lines of Fig. 6, the electric wire or the U fork is drawn into a tube shape which is close to the real shape.

Thus, according to the wire harness analyzing device and the analyzing method performed with the wire harness analyzing device of the embodiment of the present invention, because the stress between the electric wires and the stress between an electric wire and the fixture are considered, for the electric wires that are drawn as an analyzing result, it is prevented that one electric wire penetrates another electric wire and one electric wire penetrates the fixture. Thereby, in the design stage of the wire harness, the length and shape of each of the electric wires in the wire harness, for which electric wires are wired on a jig board, can be more accurately modelled. As a result, because the course along which an electric wire is wired on the jig board becomes nearer to the course that the electric wire of the actual wire harness follows, the design of the whole jig board such as the position where a fixture is arranged on the jig board or the shape of a fixture can be examined beforehand.

In the above embodiment of the present invention, as an algorithm to prevent penetration between electric wires and penetration between an electric wire and the fixture, with reference to "a fundamental study on wire harness simulation technique using interatomic force potential by Takei Amane, Matsushima Motoi, Komiya Shigeru and Yamamoto Ichiro, Japan Society of Mechanical Engineers Computational Mechanics Conference Proceedings", the algorithm in which the stress between the electric wires and the stress between an electric wire and the fixture are considered is described. However, the present invention is not limited to the algorithm in which the interatomic force potential is used. Any algorithms that can prevent penetration between electric wires and penetration between an electric wire and a fixture can be applied to the present invention.

In the above embodiment of the present invention, when the U fork, which is a fixture, is modelled, the whole U folk is modelled. However, it is also possible that only the part which can contact the potential evaluation atoms to model the electric wire is modelled with potential evaluation atoms. Referring now to Fig. 6, it is considerable to model only the U character portion 31 of the U fork 3 of the U character form or to model only the surface of the U character part 31. Thereby, the operation efficiency increases because potential evaluation atoms to be analyzed can be reduced. Furthermore, it is also possible not to model the U fork which is a fixture as spherical potential evaluation atoms that are continuous, but as shown in Fig. 7, to model the U fork as a cylindrical body having a certain radius around the center line of the U fork. At this time, a boundary condition to prevent potential evaluation atoms of an electric wire from entering into the U fork, more specifically, a boundary condition to retain the potential evaluation atoms at positions where the surface of the potential evaluation atoms of the electric wire contacts the outer surface of the cylindrical body even if the potential evaluation atoms are analyzed so that the surface of the potential evaluation atoms is positioned inside the U fork is set for the outer surface of the cylindrical body. Thereby, the operation efficiency increases because potential evaluation atoms to be analyzed can be reduced. The boundary condition to be set when the U fork is modelled as a cylindrical body is not limited to the above. A boundary condition such as that one of the potential evaluation atoms of an electric wire whose distance from the U fork is the shortest is identified, and an interatomic repulsive force is generated for the potential evaluation atom based on the distance to position the potential evaluation atom may be considered.

In the above embodiment of the present invention, besides the plurality of electric wires of the wire harness W, the fixture is also modelled with potential evaluation atoms. However, it is considerable to model only the plurality of electric wires of the wire harness W without modelling the fixture with potential evaluation atoms. In this case, a technique, for example, in which numerical values which indicate the three-dimensional shape to model the fixture are input, and based on the numerical values, the U fork is superimposed on the electric wire which is modelled with potential evaluation atoms to output the display, is considerable.

### [Other embodiments in which the algorithm to prevent penetration is applied]

In the above embodiment, the algorithm to prevent penetration between electric wires of the wire harness and penetration between an electric wire and the fixture is described. Herein, other embodiments in which the algorithm is applied are described.

The calculation algorithm that the wire harness analyzing device of the other embodiments of the present invention perform uses the algorithm described in the above item [wire harness simulation technique in which stress between electric wires is considered]. Schematically, in the calculation algorithm of the other embodiments of the present invention, besides the plurality of electric wires of the wire harness W, various exterior components of the wire harness W such as a connector, a protector, a corrugated tube, and a resin tape are modelled with a lot of spherical potential evaluation atoms which are arranged to be next to each other. In this way, an imaginary wire harness can be so modelled that the electric wires would not penetrate the exterior components.

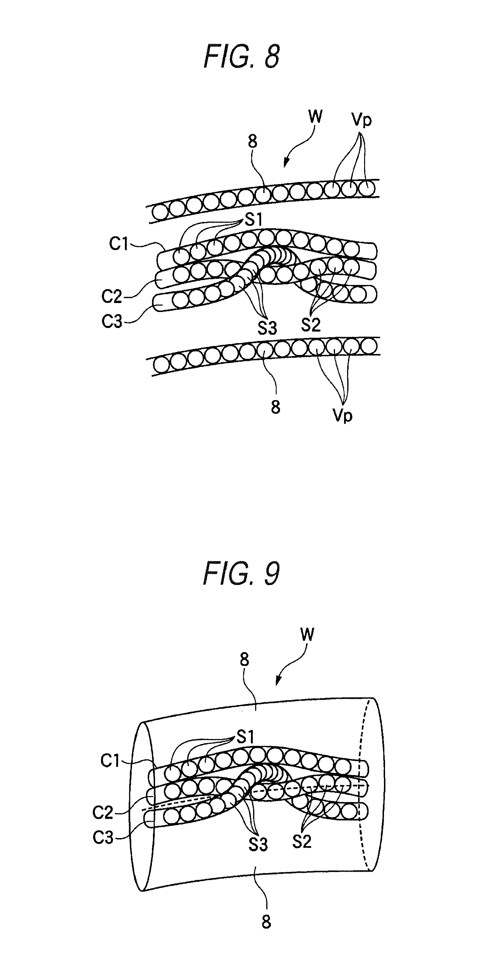

Herein, an example to model a corrugated tube in various components of a wire harness W with spherical potential evaluation atoms is described. Fig. 8 is a figure which indicates electric wires and a corrugated tube which are modelled with spherical potential evaluation atoms. As shown in Fig. 8, a wall 71 which defines the tube shape of a corrugated tube 8 is so arranged that spherical potential evaluation atoms Uc are continuous.

For the potential evaluation atoms Uc of the corrugated tube 8, in consideration of the stiffness of the corrugated tube, numerical values that provide the attractive force and repulsive force that occur between potential evaluation atoms Uc are set.

The calculation algorithm that the wire harness analyzing device of the other embodiments of the present invention performs is performed as described in the above item [wire harness simulation technique in which stress between electric wires is considered] by using the potential evaluation atoms with which the electric wires are modelled and the potential evaluation atoms with which the fixture is modelled.

Thus, according to the wire harness analyzing device and the analyzing method performed with the wire harness analyzing device of the other embodiments of the present invention, because the stress between the electric wires, the stress between an electric wire and the fixture and the stress between an electric wire and an exterior component are considered, for the electric wires that are drawn as an analyzing result, it is prevented that one electric wire penetrates another electric wire, one electric wire penetrates the fixture and one electric wire penetrates the exterior component. Thereby, in the design stage of the wire harness, the length and shape of each of the electric wires in the wire harness, for which electric wires are wired on a jig board, can be more accurately modelled. As a result, because the course along which an electric wire is wired on the jig board becomes nearer to the course that the electric wire of the actual wire harness follows, the design of the whole jig board such as the position where a fixture is arranged on the jig board or the shape of a fixture can be examined beforehand.

In the other embodiments of the present invention, when the corrugated tube, which is an exterior component, is modelled, the whole corrugated tube is modelled. However, it is also possible that only the part which can contact the potential evaluation atoms to model the electric wire is modelled with potential evaluation atoms. Thereby, the operation efficiency increases because potential evaluation atoms to be analyzed can be reduced. Furthermore, it is also possible not to model the corrugated tube which is an exterior component as spherical potential evaluation atoms Up that are continuous, but as shown in Fig. 9, to model the corrugated tube 8 as a cylindrical body having a certain radius around the center line of the corrugated tube. At this time, a boundary condition to prevent potential evaluation atoms of an electric wire from entering the space outside the corrugated tube, more specifically, a boundary condition to retain the potential evaluation atoms at positions where the surface of the potential evaluation atoms of the electric wire contacts the inner surface of the cylindrical body even if the potential evaluation atoms are analyzed so that the surface of the potential evaluation atoms is positioned outside the corrugated tube is set for the inner surface of the cylindrical body. Thereby, the operation efficiency increases because potential evaluation atoms to be analyzed can be reduced. The boundary condition to be set when the corrugated tube is modelled as a cylindrical body is not limited to the above. A boundary condition such as that one of the potential evaluation atoms of an electric wire whose distance from the corrugated tube is the shortest is identified, and an interatomic repulsive force is generated for the potential evaluation atom based on the distance to position the potential evaluation atom may be considered.

Herein, the features of the wire harness analyzing device, the wire harness analyzing method and the wire harness analyzing program according to the embodiments of the present invention described above are briefly, collectively listed in the following [1] to [6], respectively.
[1] A wire harness analyzing device which analyzes a wire harness wired on a jig board including:
   an input means (411) that receives the input of numerical values to model electric wires of the wire harness and a fixture which is arranged on the jig board and which makes it possible to wire the wire harness on the jig board; and
   an output means (415) that displays the electric wire which is wired on the fixture based on information related to the electric wire which is obtained as the result of an operation based on an algorithm using values including the numerical values input into the input means as initial values to prevent penetration between electric wires and penetration between an electric wire and the fixture.
[2] The wire harness analyzing device according to the configuration [1], wherein the output means (415) displays the electric wire which is wired on the fixture based on information related to the electric wire which is obtained as the result of an operation based on an algorithm using the values including the numerical values input into the input means (411) as the initial values and considering stress that acts between electric wires and stress that acts between an electric wire and the fixture.
[3] The wire harness analyzing device according to the configuration [1] further comprising:
   the electric wires; and
   an exterior component,
   wherein the input means (411) receives the input of numerical values to model the electric wires and the exterior component of the wire harness, and
   the output means (415) displays the electric wire which is wired on the fixture based on information related to the electric wire which is obtained as the result of an operation based on an algorithm using the values including the numerical values input into the input means (411) as the initial values to prevent penetration between electric wires, penetration between an electric wire and the fixture, and penetration between an electric wire and the exterior component.
[4] The wire harness analyzing device according to the configuration [3], wherein the output means (415) displays the electric wire which is wired on the fixture based on information related to the electric wire which is obtained as the result of an operation based on an algorithm using the values including the numerical values input into the input means (411) as the initial values and considering stress that acts between electric wires, stress that acts between an electric wire and the fixture and stress that acts between an electric wire and the exterior component.
[5] A wire harness analyzing method which analyzes a wire harness wired on a jig board comprising
   an input step (S51) to input numerical values to model electric wires of the wire harness and a fixture which is arranged on the jig board and which makes it possible to wire the wire harness on the jig board;
   an operation step (S52) to perform an operation based on an algorithm using values including the numerical values input in the input step as initial values and considering stress that acts between electric wires and stress that acts between an electric wire and the fixture; and
   an output step (S53) to display the electric wire which is wired on the fixture based on information related to the electric wire which is obtained as the result of the operation in the operation step.
[6] A wire harness analyzing program causing a computer to execute the steps of the wire harness analyzing method according to claim 5.

Although the present invention is described in detail with reference to the specific embodiments, it is apparent that various modifications and amendments may be made by those skilled in the art without departing from the spirit and scope of the present invention.

This application is based on Japanese Patent Application No. 2012-009359 filed on January 19, 2012, the entire contents of which are incorporated herein by reference.

### Industrial applicability

The present invention relates to a wire harness analyzing device, a wire harness analyzing method and a wire harness analyzing program for analyzing a wire harness, and an effect is achieved which is that, in the design stage of the wire harness, the length and shape of each of the electric wires in the wire harness, for which the electric wires are wired on a jig board, can be more accurately modelled.

### Reference Signs List

- 411: input part
- 412: database part
- 413: program memory
- 414: data memory
- 415: display part
- 416: processing part

## Claims

1. A wire harness analyzing device which analyzes a wire harness wired on a jig board comprising:
an input means that receives the input of numerical values to model electric wires of the wire harness and a fixture which is arranged on the jig board and which makes it possible to wire the wire harness on the jig board; and
an output means that displays the electric wire which is wired on the fixture based on information related to the electric wire which is obtained as the result of an operation based on an algorithm using values including the numerical values input into the input means as initial values to prevent penetration between electric wires and penetration between an electric wire and the fixture.

2. The wire harness analyzing device according to claim 1, wherein the output means displays the electric wire which is wired on the fixture based on information related to the electric wire which is obtained as the result of an operation based on an algorithm using the values including the numerical values input into the input means as the initial values and considering stress that acts between electric wires and stress that acts between an electric wire and the fixture.

3. The wire harness analyzing device according to claim 1 further comprising:
the electric wires; and
an exterior component,
wherein the input means receives the input of numerical values to model the electric wires and the exterior component of the wire harness, and
the output means displays the electric wire which is wired on the fixture based on information related to the electric wire which is obtained as the result of an operation based on an algorithm using the values including the numerical values input into the input means as the initial values to prevent penetration between electric wires, penetration between an electric wire and the fixture, and penetration between an electric wire and the exterior component.

4. The wire harness analyzing device according to claim 3, wherein the output means displays the electric wire which is wired on the fixture based on information related to the electric wire which is obtained as the result of an operation based on an algorithm using the values including the numerical values input into the input means as the initial values and considering stress that acts between electric wires, stress that acts between an electric wire and the fixture and stress that acts between an electric wire and the exterior component.

5. A wire harness analyzing method which analyzes a wire harness wired on a jig board comprising:
an input step to input numerical values to model electric wires of the wire harness and a fixture which is arranged on the jig board and which makes it possible to wire the wire harness on the jig board;
an operation step to perform an operation based on an algorithm using values including the numerical values input in the input step as initial values and considering stress that acts between electric wires and stress that acts between an electric wire and the fixture; and
an output step to display the electric wire which is wired on the fixture based on information related to the electric wire which is obtained as the result of the operation in the operation step.

6. A wire harness analyzing program causing a computer to execute the steps of the wire harness analyzing method according to claim 5.
